# FASCICULE DE BREVET EUROPEEN

(11) **EP 0 646 230 B1**
(45) Date de publication et mention de la délivrance du brevet: **03.03.1999**
(21) Numéro de dépôt: 94913655.0
(22) Date de dépôt: 18.04.1994
(51) Int. Cl.: F27D 1/16, C03B 19/04, C03C 17/245, F27B 14/10

(54) **CREUSET**
SCHMELZTIEGEL
CRUCIBLE

(30) Priorité: 19.04.1993 FR 9304570
(43) Date de publication de la demande: 05.04.1995
(73) Titulaire: QUARTZ ET SILICE, 92400 Courbevoie (FR)
(72) Inventeur: BALIAN, Pierre, F-75015 Paris (FR); RIMLINGER, Serge, F-77140 Nemours (FR); TROUVE, Maurice, F-77140 Saint-Pierre-les-Nemours (FR); VASSEL, Jean-François, F-77570 Chateau-Landon (FR); SARGOOD, Paul, F-77140 Saint-Pierre-les-Nemours (FR)
(74) Mandataire: Breton, Jean-Claude
(86) Numéro de dépôt international: FR9400428
(87) Numéro de publication internationale: WO9424505

(56) Documents cités:
- EP-A- 0 075 516
- DE-C- 865 696
- FR-A- 2 213 124
- FR-A- 2 380 997
- FR-A- 2 648 453
- GB-A- 1 153 757
- GB-A- 2 060 437
- US-A- 4 148 940
- US-A- 4 400 412
- US-A- 4 571 350

## Description

L'invention concerne les creusets destinés à supporter des températures élevées pour recevoir des matériaux destinés à être fondus, décomposés ou, d'une manière générale, transformés en évitant toute interaction tant physique que chimique entre le matériau du creuset et son contenu.

C'est ainsi que pour des préparations délicates de métaux ou d'alliages précieux ou de composition très spéciales comme par exemple pour préparer des super-alliages ou des poudres, on désire élaborer les compositions à hautes températures (1000-1600°C) en évitant la présence de certaines impuretés.

Une solution couramment adoptée consiste à utiliser un creuset fait d'un matériau qui ne comprend que des éléments chimiques soit compatibles avec la préparation, soit non diffusants. Mais le choix des matériaux réfractaires disponibles n'est pas vaste car ils doivent se mettre en oeuvre sans trop de difficultés et avoir les propriétés mécaniques et thermiques suffisantes.

Selon les cas, on utilise habituellement entre autres, de l'alumine pure, du nitrure ou du carbure de silicium, du graphite ou même, dans le cas d'alliages très spéciaux, de la zircone.

Une autre technique a été proposée, elle consiste à revêtir un creuset fait d'un matériau plus traditionnel comme la silice, d'une couche-écran faite par exemple d'oxyde d'yttrium ou d'aluminium. La méthode de dépôt d'une telle couche-écran utilise en général une barbotine qui laisse un dépôt à l'intérieur du creuset, ce dépôt étant ensuite séché puis cuit à très haute température et enfin refroidi avec précaution.

Les deux types de solutions précédents présentent l'un comme l'autre des inconvénients. La réalisation d'un creuset en un matériau peu habituel et peu adapté, souvent fragile et parfois très cher oblige à des précautions d'emploi importantes de manière à éviter les chocs mécaniques, les chocs thermiques. Par ailleurs, comme chaque creuset par sa nature, n'est compatible qu'avec certains types de fusions limités, les séries sont faibles, les prix élevés. L'autre technique, celle consistant à revêtir l'intérieur d'un creuset courant, en silice le plus souvent, par un revêtement obtenu à partir d'une barbotine, est longue, nécessite des précautions (recuisson) et est difficile à généraliser à des enductions variées, par ailleurs, elle est et restera artisanale.

L'invention se donne pour tâche de fournir des creusets faciles à réaliser, bon marché compatibles avec les matériaux les plus divers.

L'invention doit permettre par des moyens simples à mettre en oeuvre et faciles à exploiter en série, de traiter des creusets couramment utilisés dans une certaine gamme de températures pour les rendre compatibles avec tous les matériaux susceptibles d'être fondus, calcinés et, d'une manière générale, transormés ou retraités dans cette gamme de températures.

La technique de l'invention doit, en particulier, rendre des creusets en silice capables de fondre des métaux précieux ou leurs alliages, des alliages métalliques à base de nickel, cobalt et/ou de fer dits "super-alliages" dans la gamme des températures comprise entre 1450 et 1600°C, de décomposer des produits divers, voire de réaliser des transformations cristallines par traitement thermique à haute température. La méthode de l'invention doit également permettre d'élaborer dans des creusets standard, en particulier à base de silice, des verres spéciaux comme par exemple des verres pour laser.

La technique antérieure consistant à revêtir l'intérieur d'un creuset fait d'un matériau banal avec un dépôt obtenu par une barbotine est décrite par exemple dans le brevet US 4 723 764. Une forme en silice fondue pulvérulente agglomérée est obtenue à partir d'une barbotine coulée dans un moule en plâtre puis séchée à l'air. On dépose alors à l'intérieur de la forme un revêtement à base de poudre d'oxyde d'yttrium. Le tout est ensuite cuit pendant deux heures à 1200°C. Un tel creuset est utilisé pour la fusion d'alliages de métaux précieux (Ag) et la fonction de la couche d'oxyde d'yttrium est de permettre un démoulage complet sans que du métal reste accroché à la surface du creuset. Tel qu'il est décrit, le revêtement ne peut présenter une solution satisfaisante à l'arrachement de la couche et à la diffusion des espèces constitutives de la couche arrachée comme la silice car, à la poudre d'oxyde d'yttrium on a ajouté 15 % de silice colloïdale qui est nécessaire à la tenue du revêtement.

Il est connu de déposer sur des substrats chauffés divers mais plus particulièrement sur du verre, des composés, oxydes dans la plupart des cas, obtenus par dissociation thermique et souvent oxydation de composés métalliques, en général organiques. Ces techniques souvent appelées pyrolyse se font en phase vapeur (CVD, chemical vapor deposition) liquide (en solution) ou solide (en utilisant une poudre). Cette dernière technique est décrite dans le brevet US 4 172 159 dans le cas du verre plat pour y déposer une couche de SnO₂ conducteur à partir de sels organométalliques d'étain tels que le dibutyloxyde d'étain par exemple, en présence d'air et d'un gaz contenant du fluor.

De même dans le brevet EP-B-0 075 516, on décrit une technique pour déposer sur du verre silico-sodo-calcique une couche mince de TiO₂ en projetant sur le verre à plus de 500°C, une suspension dans l'air d'une poudre de Ti (OCH₃)₄.

Le document DE-C-865 696 décrit la fabrication de revêtements d'oxyde pour creuset permettant d'éviter la contamination de métaux fondus par le matériau du creuset. Le revêtement est obtenu par dépôt sous vide, soit par évaporation soit par pulvérisation cathodique et, en particulier, par évaporation sous vide de métaux en atmosphère d'oxygène. L'épaisseur du revêtement d'oxyde est de l'ordre de quelques microns.

L'invention propose un creuset en matériau réfractaire destiné à contenir des matériaux à haute température dans lequel la paroi intérieure, comporte un revêtement à base d'une couche mince d'une épaisseur inférieure à 10 µm. Plus précisément, l'invention consiste en ce que le revêtement est obtenu par pyrolyse, la substance à pyrolyser étant à base d'organométalliques.

Le creuset possède avantageusement au moins sa paroi intérieure faite de silice vitreuse et la couche mince pyrolysée est de préférence à base d'oxyde.

Selon l'invention, de préférence la couche mince est faite d'oxyde de métal ou de métaux choisis dans le groupe comprenant le magnésium, le calcium, l'yttrium, le titane, le zirconium, le hafnium, le tantale, le chrome, l'aluminium, l'étain et le silicium.

L'invention apporte ainsi une solution au problème posé puisqu'il suffit de ne faire entrer dans la composition de la couche mince que des éléments, en particulier des métaux, compatibles avec le ou les matériaux à contenir dans le creuset pour éviter toute perturbation due à la diffusion des éléments chimiques constitutifs du creuset ou due à l'arrachement et à l'entraînement de particules issues de la paroi dans les matériaux élaborés dans le creuset.

Pour réaliser le creuset de l'invention, le procédé prévoit le dépôt pyrolytique, notamment à l'intérieur du creuset, d'une substance à base d'éléments chimiques compatibles avec les matériaux à contenir dans les creusets. On choisit de préférence la substance à pyrolyser à base d'organométalliques. Selon le procédé la température de la surface interne du creuset est, lors du dépôt, comprise entre 600 et 1500°C et, de préférence l'organométallique est choisi dans le groupe comprenant les chélates et alcoolates notamment l'isopropylate d'aluminium, et les acétylacétonates de magnésium, d'yttrium, de zirconium et d'aluminium.

Le choix de l'organométallique dépend des conditions de la pyrolyse comme par exemple sa solubilité dans le cas de pyrolyse liquide ou la stabilité et l'absence de tendance à la constitution de mottes dans le cas de la pyrolyse de poudres. En effet, l'invention prévoit en particulier l'utilisation de la technique de pyrolyse de poudres en suspension dans un gaz. Le choix du métal de l'organométallique, qui exclut évidement les éléments interdits dans le matériau à haute température, dépend de la nature du creuset, de la disponibilité de l'organométallique, etc...

L'invention concerne également le dispositif selon la revendication 9 pour mettre en oeuvre le procédé de pyrolyse de poudre décrit ci-dessus. Il comporte un système d'alimentation de poudre tel qu'une buse avec une chambre interne dont l'orifice épouse la forme intérieure du creuset.

De préférence, la buse comporte un élément de pré-détente. C'est avantageusement un tube avec un orifice qui débouche dans la chambre interne de la buse. La buse est en mouvement relatif par rapport au creuset.

Dans une variante de l'invention, les orifices de la chambre interne de la buse et du tube sont des fentes qui s'étendent sur toute la hauteur du creuset.

Le dispositif de l'invention comprend également, en amont du système d'alimentation de poudre, un distributeur doseur suivi d'un venturi qui introduisent la poudre dans le gaz.

La description et les figures permettront à l'homme du métier de comprendre et de mettre en oeuvre l'invention.

Parmi les figures, la première représente l'installation de dépôt pyrolytique de poudre sur un creuset.

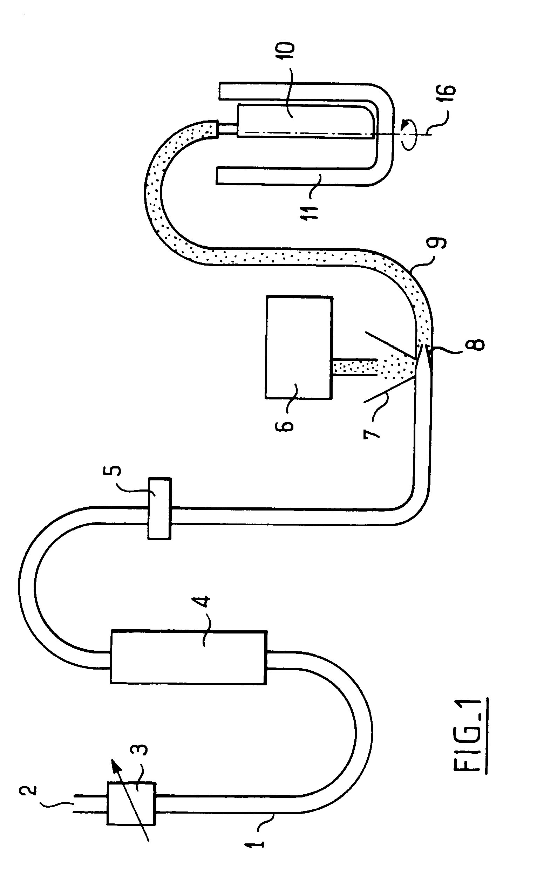

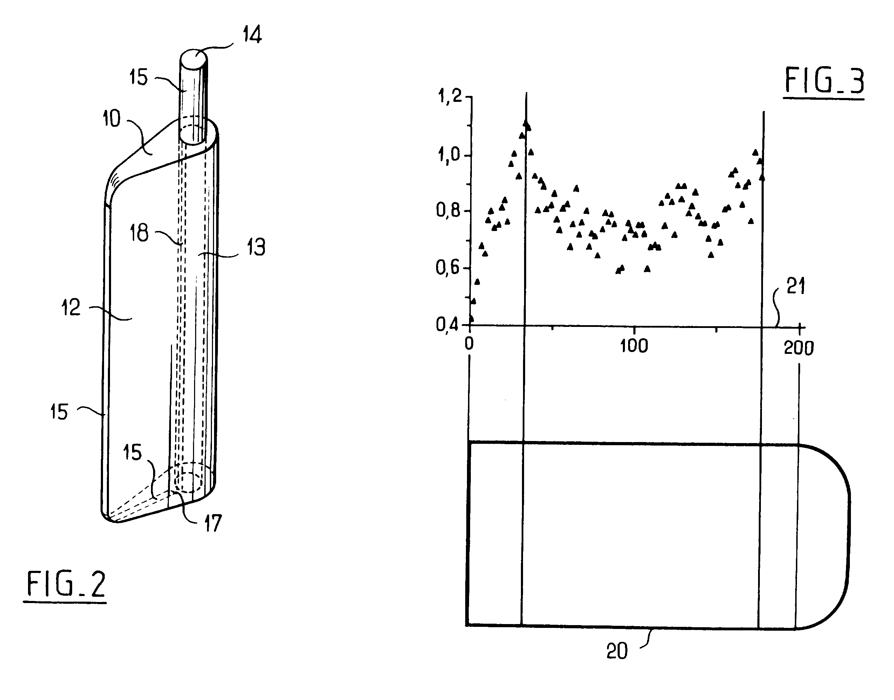

La figure 2 est un détail de la figure 1, elle montre la buse et la figure 3 montre la répartition des épaisseurs d'Al₂O₃ à l'intérieur d'un creuset de silice vitreuse.

La préparation de matériaux à haute température, que ce soit la fusion d'alliages métalliques, la calcination de poudre ou toute réaction chimique pose des problèmes spécifiques du fait qu'aux températures élevées, les vitesses de diffusion et en général, les solubilités s'accroissent fortement, il est alors le plus souvent impossible d'éviter la diffusion des espèces constituant le creuset dans le produit à traiter ou les arrachements qui ont dans ce cas pour conséquence des inclusions dans le produit et des pollutions. Ainsi si l'on veut fondre des métaux ou des alliages précieux ou bien préparer des alliages spéciaux dits "super-alliages" à base de nickel, à base de fer ou à base de cobalt en les faisant fondre dans un creuset de silice, une forte réactivité a lieu entre l'intérieur du creuset et le métal ou l'alliage dans des proportions telles qu'elle nuit aux performances du produit. Mais d'un autre côté, les creusets en silice tels que ceux décrits dans les brevets US 4 956 134 ou US 5 015 279 dont l'intérieur est constitué de cristaux de quartz fondus et vitrifiés présentent des avantages tels par rapport à ceux faits d'autres matériaux, en particulier leur tenue en température, leur résistance aux chocs mécaniques et aux chocs thermiques, en même temps que leur prix modéré que ce sont des outils très intéressants, qu'on voudrait pouvoir les utiliser.

En effet, le fait qu'on ne puisse utiliser des creusets en silice pour des préparations délicates oblige à les remplacer par des creusets faits d'autres matériaux comme la zircone par exemple pour les super-alliages. Il s'agit d'un matériau très cher. De même, pour la calcination des poudres, on est obligé d'utiliser des creusets en alumine frittée ou en carbure de silicium ; ces deux types de creusets sont très fragiles et nécessitent de nombreuses précautions d'emploi.

La technique de l'invention qui consiste à déposer par pyrolyse, une couche mince à l'intérieur d'un creuset, particulièrement d'un creuset en silice permet de rendre un creuset, quel que soit le matériau qui le constitue compatible avec la plupart des préparations en creuset à haute température.

Lors des essais pour préparer des creusets selon l'invention, on a utilisé des creusets en silice vitreuse qu'on a chauffés avant d'y déposer un composé tel qu'un oxyde par pyrolyse d'un organométallique en poudre en suspension dans l'air. Les creusets en silice vitreuse utilisés étaient faits à partir de cristaux de quartz, ils avaient des dimensions, hauteur 150 mm, diamètre 200 mm, épaisseur des parois 10 mm. Mais d'une manière générale, la technique de l'invention est compatible avec toutes les formes et toutes les tailles de récipients et la technique de la pyrolyse permet de déposer non seulement des oxydes mais également des oxynitrures et, en utilisant d'autres atmosphères, des composés divers.

Etant donné que lors de la fabrication de ces creusets, selon le brevet US 4 956 134 ou US 5 015 279 la fusion des cristaux de quartz s'effectue alors que la forme est en rotation et que la rotation continue durant le refroidissement, il est intéressant d'utiliser cette phase de refroidissement pour faire le dépôt pyrolytique.

Le dispositif était celui de la figure 1. On y voit un tube 1 destiné à transporter le gaz comprimé, notamment de l'air dans le cas du dépôt d'oxydes. Celui-ci qui doit être filtré soigneusement est introduit en 2. En 3, on voit un détendeur avec son manomètre. On travaille par exemple à une pression de 5 bars. Le débitmètre 4 mesure les quantités introduites, en général entre 35 et 50 Nm³/h. En 5, une électrovanne permet de commander à distance l'ouverture ou la fermeture de l'arrivée de gaz comprimé.

Le système distributeur-doseur 6 permet d'introduire des débits définis d'organo-métalliques pulvérulents dans l'entonnoir 7. Celui-ci est placé juste au-dessus d'un système de venturi 8 qui aspire la poudre dosée et la mélange au gaz qui a lui-aussi un débit donné. La poudre en suspension dans l'air est amenée à la buse 10 par le tuyau souple 9.

La buse 10 est fixe et c'est le creuset 11 en silice vitreuse qui est en rotation autour de son axe 16 (vitesse de rotation de l'ordre de 200 tours/minute).

Lors des essais, le creuset avait été chauffé auparavant à la température voulue. Elle est comprise entre 600 et 1500°C. Dans le cas où l'on désire effectuer le dépôt au moment même de la fabrication du creuset, on attend pour faire le traitement, que, pendant son refroidissement, le creuset atteigne cette température. Dans le cas où l'organométallique est un acétylacétonate d'yttrium, et le gaz vecteur, l'air, une température de 800°C au début du dépôt s'est montré satisfaisante.

La fonction d'une buse telle que la buse 10 est de répartir la poudre le plus uniformément possible sur la paroi du creuset qui lui fait face. Les systèmes les plus favorables à une répartition régulière sont ceux qui provoquent une détente des gaz en deux étapes. Cela peut être obtenu en disposant à l'intérieur de la chambre de la buse, un élément de pré-détente. Un exemple d'une telle réalisation se trouve figure 2.

Sur la figure 2, on voit en 12 la chambre de la buse et en 13, un tube qui sert, lui de chambre de pré-détente. L'air chargé de la poudre arrive en 14 dans le tube 15 qui descend jusqu'au fond de la buse. Ce tube 15 est fendu sur toute sa hauteur interne (largeur la fente 16 : 2 mm). La buse elle-même comporte une fente régulière 15 qui s'étend presque sur toute la hauteur de la buse et le long de sa partie inférieure, sa largeur est de 1 mm. Il est important que l'axe 16 de rotation du creuset qui passe par la fente 15 ne soit pas trop éloigné de son extrémité 17.

Cette disposition permet d'éviter aussi bien les manques que les surépaisseurs au centre du fond du creuset. La distance entre la buse, à l'endroit de sa fente et le creuset est comprise entre 5 et 10 mm.

Avec le dispositif précédent, on a testé les précurseurs de pyrolyse suivants : l'isopropylate d'AI, l'acétylacétonate d'AI, l'acétylacétonate de Zr et l'acétate d'yttrium, tous quatre sur la silice.

Comme le gaz vecteur des poudres était ici de l'air, le produit obtenu était à chaque fois l'oxyde du métal de la molécule organométallique du précurseur.

Dans le cas de l'isopropylate d'aluminium, l'épaisseur d'Al₂O₃ obtenu a été déterminée à l'aide d'une microsonde (étalonnée séparément). Les résultats sont représentés figure 3.

Sur la figure, en 20, on a représenté schématiquement le creuset. La position de la hauteur du point de mesure est représentée en millimètres sur l'axe des abscisses 21 tandis que l'axe des ordonnées 22 représente l'épaisseur mesurée en µm. On voit que l'épaisseur d'Al₂O₃ est partout supérieure à 0,6 µm et atteint, en haut et en bas du creuset, un micron. Un tel dépôt a été obtenu dans les conditions décrites plus haut, l'opération ne dure pas plus de 20 secondes.

La technique de l'invention est très souple, elle permet en particulier le dépôt d'oxydes simples ou bien d'oxydes mixtes, il suffit de mélanger des précurseurs différents. C'est le cas avec les acétylacétonates de zirconium et d'yttrium, le mélange de leurs poudres en suspension dans l'air projeté sur un creuset de silice dont la température est aux environs de 1000°C permet d'obtenir un oxyde mixte de zirconium et d'yttrium qui constitue une excellente barrière qui diminue et même supprime la réactivité entre la paroi du creuset et son contenu.

La technique de l'invention peut être appliquée au dépôt de composés divers tels que des oxydes, oxynitrures, etc.. à l'intérieur de creusets en silice vitreuse (qu'elle soit obtenue à partir de sable ou à partir de cristaux de quartz) elle les rend aptes à de nombreux usages.

En particulier, revêtus d'oxydes adaptés, ils servent à la fusion de super-alliages à base de nickel, à base de cobalt et à base de fer.

Tous ces alliages préparés dans les creusets de l'invention ont montré une diminution significative de la réactivité entre le creuset et l'alliage. Et pourtant, lors de l'élaboration de tels alliages, la température du creuset peut atteindre 1500°C. Ces résultats montrent à l'évidence que la couche a non seulement une épaisseur suffisante, mais qu'en plus elle n'a pas de discontinuités du type "pin holes".

Dans d'autres domaines comme par exemple celui de la calcination des poudres, les creusets de l'invention qui, ici, peuvent servir plusieurs fois, fournissent une solution simple au problème de la compatibilité entre la poudre à calciner et le creuset. On peut ainsi avec une couche compatible avec le produit à décomposer - par exemple parce qu'elle est de même nature - éviter toute contamination.

Il est également possible de préparer dans les creusets de l'invention des poudres électroluminescentes, de même, la préparation d'alliages de métaux précieux ou l'élaboration de verres spéciaux comme des verres optiques à composition particulière ou des verres pour laser ne pose plus de problème lorsqu'on utilise des creusets en silice.

On voit qu'ainsi les techniques de l'invention permettent de transformer un creuset solide et bon marché comme un creuset en silice vitreuse, en un récipient compatible avec la majorité des usages à haute température. On constate que non seulement la couche déposée adhère parfaitement à la surface du matériau du creuset au point de subir des chocs thermiques importants (1500°C) sans se détacher ni se craqueler, mais qu'en plus elle est parfaitement continue et sans lacune et qu'elle peut ainsi servir de barrière infranchissable aux éléments chimiques susceptibles de diffuser depuis la surface du matériau du creuset.

Cette technique élargit donc de manière considérable le domaine d'utilisation de creusets solides et bon marché.

## Revendications

1. Creuset en matériau réfractaire destiné à contenir des matériaux à haute température, dont la paroi intérieure comporte un revêtement à base d'une couche mince d'une épaisseur inférieure à 10 µm, **caractérisé en ce que** ledit revêtement est obtenu par pyrolyse **et en ce que** la substance à pyrolyser est à base d'organométalliques.

2. Creuset selon la revendication 1, **caractérisé en ce que** le creuset possède au moins une paroi intérieure faite de silice vitreuse.

3. Creuset selon la revendication 1 ou 2, **caractérisé en ce que** la couche mince est à base d'oxyde.

4. Creuset selon la revendication 3, **caractérisé en ce que** la couche mince est faite d'oxyde de métal ou de métaux choisis dans le groupe comprenant le magnésium, le calcium, l'yttrium, le titane, le zirconium, le hafnium, le tantale, le chrome, l'aluminium, l'étain et le silicium.

5. Procédé de fabrication d'un creuset selon la revendication 1, **caractérisé par** le dépôt pyrolytique, notamment à l'intérieur du creuset, d'une substance à base d'éléments chimiques compatibles avec les matériaux à contenir dans les creusets, la substance à pyrolyser étant à base d'organométalliques.

6. Procédé selon la revendication 5, **caractérisé en ce que** la température de la surface interne du creuset est, lors du dépôt, comprise entre 600 et 1500°C.

7. Procédé selon l'une des revendications 5 ou 6, **caractérisé en ce que** l'organométallique est choisi dans le groupe comprenant les chélates et alcoolates et notamment l'isopropylate d'aluminium, et les acétylacétonates de magnésium, d'yttrium, de zirconium et d'aluminium.

8. Procédé selon l'une des revendications 5 à 7, **caractérisé en ce que** la pyrolyse est réalisée avec des poudres en suspension dans un gaz.

9. Dispositif pour mettre en oeuvre le procédé de la revendication 8, **caractérisé en ce qu'**il comporte un système d'alimentation de poudre, comprenant une buse avec une chambre interne dont l'orifice épouse la forme intérieure du creuset en mouvement relatif par rapport à lui, **en ce que** la chambre interne est alimentée en poudre de composé organométallique **et en** **ce que** le dispositif comprend des moyens de chauffage du creuset.

10. Dispositif selon la revendication 9, **caractérisé en ce que** la buse comporte un élément de pré-détente.

11. Dispositif selon la revendication 10, **caractérisé en ce que** l'élément de pré-détente est un tube avec un orifice qui débouche dans la chambre interne de la buse.

12. Dispositif selon la revendication 11, **caractérisé en ce que** les orifices de la chambre interne de la buse et du tube sont des fentes qui s'étendent sur toute la hauteur du creuset.

13. Dispositif selon l'une des revendications 9 à 12, **caractérisé en ce que**, en amont du système d'alimentation de poudre, un distributeur doseur suivi d'un venturi introduisent la poudre dans le gaz.

14. Application du creuset selon l'une des revendications 1 à 4 à la fusion de super-alliages.

15. Application du creuset selon l'une des revendications 1 à 4 à la calcination et/ou à la décomposition de poudres, comme des substances électroluminescentes, des composés organiques comme des oxalates ou des sulfates comme des aluns.

16. Application du creuset selon l'une des revendications 1 à 4 à la préparation de métaux ou d'alliages précieux.

17. Application du creuset selon l'une des revendications 1 à 4 à l'élaboration de verres spéciaux tels que les verres pour systèmes lasants.

## Patentansprüche

1. Tiegel aus hitzebeständigem Material, welcher dazu bestimmt ist, Materialien mit hoher Temperatur aufzunehmen und dessen Innenwand einen Überzug auf der Basis einer dünnen Schicht mit einer Dicke von weniger als 10 µm umfaßt, **dadurch gekennzeichnet, daß** der Überzug durch Pyrolyse erhalten worden ist und daß die zu pyrolysierende Substanz metallorganische Verbindungen als Grundlage hat.

2. Tiegel nach Anspruch 1, **dadurch gekennzeichnet, daß** der Tiegel mindestens eine Innenwand besitzt, die aus glasigem Siliciumdioxid hergestellt ist.

3. Tiegel nach Anspruch 1 oder 2, **dadurch gekennzeichnet, daß** die dünne Schicht ein Oxid als Basis hat.

4. Tiegel nach Anspruch 3, **dadurch gekennzeichnet, daß** die dünne Schicht aus einem Oxid von (einem) Metall(en) hergestellt ist, das (die) aus der Gruppe ausgewählt ist (sind) die Magnesium, Calcium, Yttrium, Titan, Zirconium, Hafnium, Tantal, Chrom, Aluminium, Zinn und Silicium umfaßt.

5. Verfahren zur Herstellung eines Tiegels nach Anspruch 1, **dadurch gekennzeichnet, daß** insbesondere im Inneren des Tiegels eine Substanz auf der Grundlage chemischer Elemente pyrolytisch aufgebracht wird, die mit den Materialien verträglich sind, welche der Tiegel aufnehmen soll, wobei die zu pyrolysierende Substanz metallorganische Verbindungen zur Grundlage hat.

6. Verfahren nach Anspruch 5, **dadurch gekennzeichnet, daß** die Temperatur der Innenfläche des Tiegels während des Abscheidevorgangs 600 bis 1 500 °C beträgt.

7. Verfahren nach Anspruch 5 oder 6, **dadurch gekennzeichnet, daß** die metallorganische Verbindung aus der Gruppe ausgewählt ist, welche Chelate und Alkoholate, insbesondere Aluminiumisopropylat und Magnesium-, Yttrium-, Zirconium- und Aluminiumacetylacetonat, umfaßt.

8. Verfahren nach einem der Ansprüche 5 bis 7, **dadurch gekennzeichnet, daß** die Pyrolyse mit in einem Gas suspendierten Pulvern durchgeführt wird.

9. Vorrichtung zur Durchführung des Verfahrens nach Anspruch 8, **dadurch gekennzeichnet, daß** sie ein System für die Zufuhr des Pulvers, welches eine Düse mit einer Innenkammer enthält, deren Öffnung sich an die innere Form des Tiegels mit einer Relativbewegung in bezug auf diesen anschmiegt, daß die Innenkammer mit Pulver aus einer metallorganischen Verbindung versorgt wird und daß die Vorrichtung Mittel zum Erhitzen des Tiegels umfaßt.

10. Vorrichtung nach Anspruch 9, **dadurch gekennzeichnet, daß** die Düse ein Vorentspannungsteil enthält.

11. Vorrichtung nach Anspruch 10, **dadurch gekennzeichnet, daß** das Vorentspannungsteil ein Rohr mit einer Öffnung ist, welche in die Innenkammer der Düse mündet.

12. Vorrichtung nach Anspruch 11, **dadurch gekennzeichnet, daß** die Öffnungen der Innenkammer von Düse und Rohr Schlitze sind, welche sich über die gesamte Höhe des Tiegels erstrecken.

13. Vorrichtung nach einem der Ansprüche 9 bis 12, **dadurch gekennzeichnet, daß** hinter dem System für die Versorgung mit Pulver eine Dosiereinrichtung, an welche sich eine Venturidüse anschließt, das Pulver in das Gas bläst.

14. Verwendung des Tiegels nach einem der Ansprüche 1 bis 4 zum Schmelzen von Superlegierungen.

15. Verwendung des Tiegels nach einem der Ansprüche 1 bis 4 zum Calcinieren und/oder Zersetzen von Pulvern wie elektrolumineszenten Substanzen, organischen Verbindungen wie Oxalaten oder Sulfaten wie Alaunen.

16. Verwendung des Tiegels nach einem der Ansprüche 1 bis 4 zur Herstellung von Edelmetallen oder Edelmetallegierungen.

17. Verwendung des Tiegels nach einem der Ansprüche 1 bis 4 zur Herstellung von Spezialgläsern wie Gläsern für Lasersysteme.

## Claims

1. Crucible of refractory material intended to contain materials at high temperatures, whereof the inner wall incorporates a coating based on a film with a thickness less than 10 µm, characterized in that said coating is obtained by pyrolysis and that the substance to be pyrolyzed is based on organometallics.

2. Crucible according to claim 1, characterized in that the crucible has at least one inner wall of vitreous silica.

3. Crucible according to claim 1 or 2, characterized in that the film is based on oxide.

4. Crucible according to claim 3, characterized in that the film is made from metal oxide or metals chosen from within the group including magnesium, calcium, yttrium, titanium, zirconium, hafnium, tantalum, chromium, aluminium, tin and silicon.

5. Process for the production of a crucible according to claim 1, characterized by the pyrolytic deposition, particularly within the crucible, of a substance based on chemical elements compatible with the materials to be contained in the crucibles, the substance to be pyrolyzed being based on organometallics.

6. Process according to claim 5, characterized in that the temperature of the inner surface of the crucible is, during deposition, between 600 and 1500°C.

7. Process according to one of the claims 5 or 6, characterized in that the organometallic is chosen from within the group including chelates and alkoxides and in particular aluminium isopropylate and magnesium, yttrium, zirconium and aluminium acetyl acetonates.

8. Process according to one of the claims 5 to 7, characterized in that pyrolysis takes place with powder suspended in a gas.

9. Apparatus for performing the process of claim 8, characterized in that it comprises a powder supply system having a nozzle with an inner chamber, whose orifice adopts the internal shape of the crucible in relative movement with respect thereto, in that the inner chamber is supplied with organometallic compound powder and in that the apparatus comprises crucible heating means.

10. Apparatus according to claim 9, characterized in that the nozzle incorporates a pre-expansion element.

11. Apparatus according to claim 10, characterized in that the pre-expansion element is a tube having an orifice issuing into the inner chamber of the nozzle.

12. Apparatus according to claim 11, characterized in that the orifices of the inner chamber of the nozzle and the tube are slots extending over the entire height of the crucible.

13. Apparatus according to one of the claims 9 to 12, characterized in that, upstream of the powder supply system, a dosing distributor followed by a venturi tube introduce the powder into the gas.

14. Application of the crucible according to one of the claims 1 to 4 to the melting of superalloys.

15. Application of the crucible according to one of the claims 1 to 4 to the calcination and/or decomposition of powders, such as electroluminescent substances, organic compounds such as oxalates or sulphates such as alums.

16. Application of the crucible according to one of the claims 1 to 4 to the preparation of precious alloys or metals.

17. Application of the crucible according to one of the claims 1 to 4 to the production of special glasses, such as glasses for laser systems.
